Europäisches Patentamt

European Patent Office

Office européen des brevets

(19)

(11) Publication number: **0 282 183 B1**

## EUROPEAN PATENT SPECIFICATION

(12)

(45) Date of publication of patent specification: **09.09.92**  (51) Int. Cl.⁵: **B64D  11/00**

(21) Application number: **88301318.7**

(22) Date of filing: **17.02.88**

(54) **Aircraft service systems and methods.**

(30) Priority: **23.02.87 JP 39772/87**

(43) Date of publication of application:
**14.09.88 Bulletin  88/37**

(45) Publication of the grant of the patent:
**09.09.92 Bulletin  92/37**

(84) Designated Contracting States:
**AT DE ES FR GB IT NL**

(56) References cited:
**DE-A- 3 426 893**
**GB-A- 2 158 610**
**US-A- 4 584 603**
**US-A- 4 684 981**

(73) Proprietor: **SONY CORPORATION**
**7-35 Kitashinagawa 6-chome Shinagawa-ku Tokyo 141(JP)**

(72) Inventor: **Kondo, Yoshiyuki c/o Patents Division**
**Sony Corporation 6-7-35 Kitashinagawa**
**Shinagawa-ku Tokyo 141(JP)**
Inventor: **Sahara, Hiroshi c/o Patents Division**
**Sony Corporation 6-7-35 Kitashinagawa**
**Shinagawa-ku Tokyo 141(JP)**
Inventor: **Hidejima, Yasuhiro c/o Patents Division**
**Sony Corporation 6-7-35 Kitashinagawa**
**Shinagawa-ku Tokyo 141(JP)**

(74) Representative: **Pilch, Adam John Michael et al**
**D. YOUNG & CO. 10 Staple Inn**
**London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to aircraft service systems and methods, including the provision of attendant call lights and passenger reading lights.

It is conventional to provide an aircraft used for passenger travel with an audio/video system for entertaining passengers during flights of long duration. It is also conventional for such aircraft to include passenger service units (PSU's) including a reading light for each passenger and an attendant call light for each passenger for use in drawing attention to each passenger requiring service.

However, in conventional aircraft, the audio/video system is separate from the reading light and attendant call light system, so that the arrangement of the two systems is complicated. Further, since conventional PSU's are connected in cascade, the reading lights and the attendant call lights in such units respond so late that passengers are often inconvenienced.

Further, in certain of these systems, there is only one attendant call light provided per column of passenger seats, so that it is difficult to know which passenger in a column of seats is calling an attendant.

German Patent Application DE-A-3 426 893 (and corresponding GB-A-2 162 724) discloses an arrangement for carrying out passenger-related and air-steward related functions in an aircraft by the use of a processing and interface unit with terminal units distributed locally throughout the cabin. The manner of communication between the terminal units and the processing and interface unit is not specified.

According to one aspect of the present invention there is provided an aircraft service system comprising:

a plurality of attendant call lights each serving a different passenger seat in an aircraft;

a plurality of reading lights each serving a different one of the passenger seats;

a plurality of switch units, each controlling at least one of the attendant call lights and at least one of the reading lights;

a plurality of terminal units, each provided at a different one of the passenger seats, each terminal unit having an attendant call key, a reading light key, means for generating a request signal in response to operation of at least one of the attendant call key and the reading light key, and decoder means for decoding encoded signals;

a central control apparatus including encoder means for encoding signals to be sent to said terminal units; and

means for transmitting signals between the terminal units and the central control apparatus;

characterised in that:

said terminal units each include means for generating an address identifying one of the passenger seats, such that said generated request signal includes the address;

said central control apparatus includes a control signal generating means capable of generating an attendant call light control signal in response to each request signal generated in response to operation of one of the attendant call keys and a reading light control signal in response to each request signal generated in response to operation of one of the reading light keys, each said control signal generated by said control signal generating means including a seat address identifying one of the lights; and

said switch units are each associated with means for identifying the seat address of each received control signal, and are responsive to the corresponding control signal transmitted from the central control apparatus to control the respective reading light or attendant call light.

According to another aspect of the present invention there is provided an aircraft service method including the steps of:

at each of a plurality of terminal units provided at a respective plurality of passenger seats, generating a request signal identifying at least one of an attendant call light and a reading light serving the passenger seat at which the terminal unit is provided;

transmitting each request signal from the terminal unit at which it is generated to a central control apparatus; and

in response to each request signal, controlling a respective one of a plurality of switch units, each provided at a respective one of the plurality of passenger seats, and each being capable of controlling at least one of the reading lights and at least one of the attendant call lights;

characterised in that:

in response to each request signal, a control signal is generated at the central control apparatus and is transmitted to the switch units;

each generated request signal includes an address identifying one of the passenger seats;

each control signal generated at the central control apparatus includes a seat address identifying the light identified by the request signal;

each control signal is digitally encoded at the central control apparatus, and decoded at each terminal unit;

at each switch unit, each received control signal is processed to identify the seat address included in said received control signal; and

each light identified by one of the seat addresses is controlled as identified by the received control signal processing step.

The invention will now be described by way of example with reference to the accompanying drawings, throughout which like parts are referred to by like references, and in which:

Figures 1A and 1B are block circuit diagrams showing the overall arrangement of an aircraft service system according to an embodiment of the present invention;

Figure 2 is a plan view showing a selection indicating apparatus included in the system of Figures 1A and 1B;

Figure 3 is a plan view of two units of the selection indicating apparatus shown in Figure 2, each mounted on the rear surface of a respective passenger seat;

Figures 4A to 4C and 5A to 5D are diagrams showing signal formats used in the system according to an embodiment of the invention;

Figures 6A and 6B are block circuit diagrams showing the overall arrangement of a service system according to another embodiment of the present invention; and

Figure 7 is a perspective view of the interior of an aircraft equipped with a preferred embodiment of the invention.

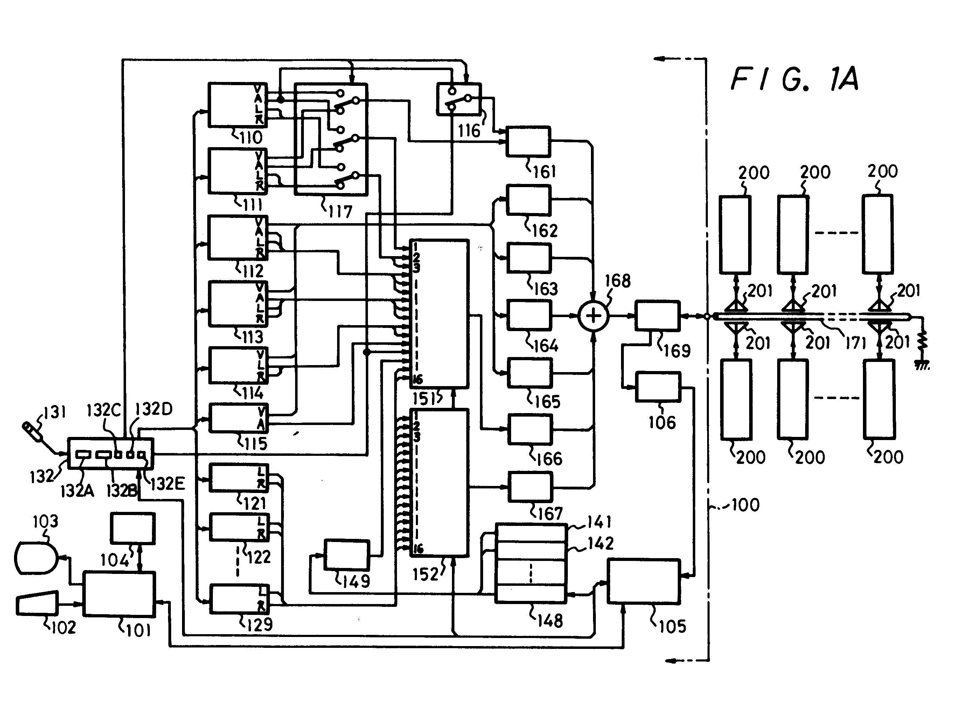

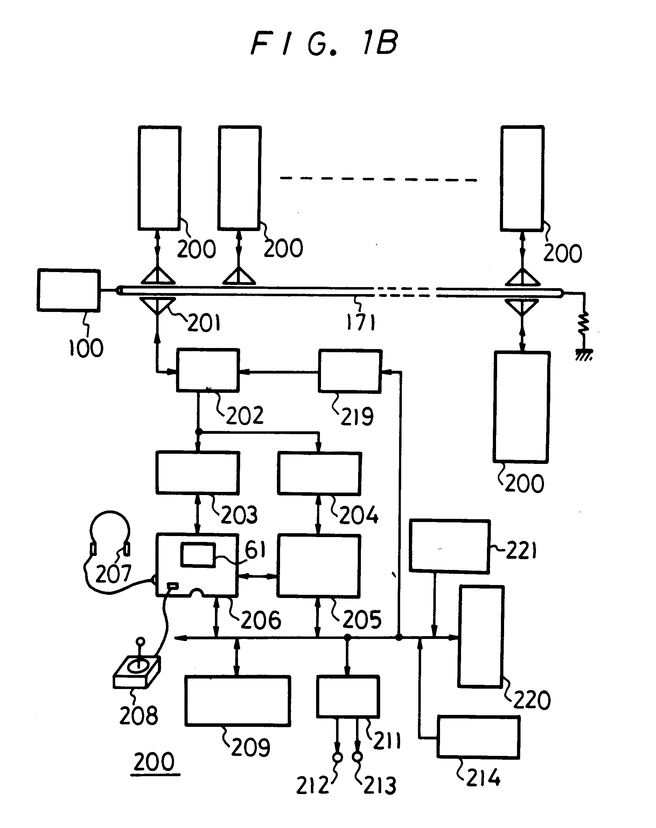

A service system according to an embodiment of the present invention, for use in an aircraft, will hereinafter be described with reference to Figures 1A and 1B.

Referring to Figures 1A and 1B, a transmitter 100 is provided in a crew's compartment or the like in an aircraft, and terminal units 200 each serve a different one of the aircraft passenger seats. The embodiment of Figures 1A and 1B includes a frequency-division-multiplex system including seven "down" channels for transmitting signals from the transmitter 100 to the terminal units 200 and two "up" channels for transmitting signals from the terminal units 200 to the transmitter 100. The down channels are used to transmit a variety of information signals, control signals and polling signals. The up channels are used both to transmit data generated by the passengers at arbitrary times from the terminal units 200, and data generated in response to polling signals from the transmitter 100.

In the transmitter 100, video tape recorders (VTRs) 110 to 113 are provided, each of which may be an 8 mm VTR, for example. The VTR 110 is used for an override operation and is loaded with a cassette tape explaining, for example, how to put on a life-jacket. Each of the other VTRs 111, 112 and 113 is loaded with a cassette tape of a video programme such as a film.

Each of the VTRs 111, 112 and 113 is provided with a terminal V for supplying a reproduced video signal and with terminals L, R and A for supplying reproduced audio signals.

The VTRs 110 to 113 supply video signals V, stereo audio signals L and R in a first language, and monaural audio signals A in a second language.

The transmitter 100 also includes a television tuner 114, a still image reproducer 115 such as a CD-ROM (compact disc read only memory) player, which is loaded with a compact disc on which airport maps, various procedures, and other information may be recorded. Each of the units 114 and 115 supplies video signals V and audio signals L, R and A.

The transmitter 100 further includes CD players 121 to 129 which supply stereo audio signals L, R which may be music signals, for example.

The Figure 1A system includes a microphone 131 for making announcements from within the cabin, an audio-visual (AV) control unit 132, an announce switch 132A, an override switch 132B, and pause switches 132C to 132E for commanding the VTRs 111 to 113 to pause.

The Figure 1A system also includes memory units 141 to 147 (each of which may be, for example, a ROM cartridge for use in a conventional personal computer such as an MSX standard personal computer) in which software programs such as games or the like may be written, and a random access memory (RAM) cartridge 148 in which may be stored programs and data such as a menu or the like indicating services available in the cabin. The programs and data from the cartridges 141 to 148 are time-division-multiplexed by a multiplexer 149 for transmission as a serial signal to a CADA (cable digital audio/data transmission) encoder 151, as will be described later. A further CADA encoder 152 is also provided.

The CADA encoders 151 and 152 are of the type described in US Patent No. US-A-4 684 981. Each of the CADA encoders 151 and 152 pulse code modulates ("PCM-codes") and time-division-multiplexes 16-channel monaural audio signals (or 8-channel stereo audio signals) and a command signal (to be described below) for controlling one or more of the terminal units 200. The multiplexed signals generated in each of the CADA encoders 151 and 152 have substantially the same bandwidth as that of the ordinary video signal. The format of the PCM signals generated in the CADA encoders 151 and 152 will be described later.

The Figure 1A system also includes modulators 161 to 167 each of which preferably includes an amplitude modulator of the type that produces vestigial sideband (VSB) signals, a duplexer 169 which separates signals in the down channels and those in the up channels, and a controller 105 preferably comprising a microcomputer for controlling the above-mentioned respective circuits and the terminal units 200. The controller 105 is supplied with commands, data, and other signals from the terminal units 200 through the duplexer 169 and a demodulator 106.

A master control unit 101 comprises a microcomputer for centrally controlling and monitoring operation of the overall system including the transmitter 100 and the terminal units 200. For this purpose, the master control unit 101 is connected to the controller 105, a keyboard 102 for inputting data, a cathode ray tube (CRT) display 103 for monitoring data, and an external storage unit 104, which may be a floppy disc drive or a hard disc drive (HDD).

Normally, the video signal V from the VTR 111 is supplied to the modulator 161 through a switching circuit 117. On the other hand, video signals V from the VTRs 112 to 115 are respectively supplied to the modulators 162 to 165 to be modulated in the same manner as are video signals to be broadcast in an ordinary television broadcasting system. The modulators 161 to 165 output modulated signals, of the type broadcast by ordinary television broadcast systems, each occupying a different frequency channel. These modulated signals are supplied to an adder 168.

Audio signals L, R and A from the VTR 111 are supplied to the CADA encoder 151 through the switching circuit 117. Audio signals L, R and A from the VTRs 112, 113, the units 114, 115 and the compact disc players 121 to 129 and output signals from the multiplexer 149 are supplied to the encoders 151 and 152 wherein these signals are converted into two time-division-multiplexed signals. These time-division-multiplexed signals are respectively supplied to the modulators 166 and 167 to be modulated, so that modulated signals occupying vacant channels (i.e., channels other than those occupied by the modulated signals produced in the modulators 161 to 165) emerge from the modulators 166 and 167. The modulated signals from the modulators 166 and 167 are then supplied to the adder 168.

The adder 168 then frequency-multiplexes the modulated signals from the modulators 161 to 167 and outputs the resulting multiplexed signals.

This multiplexed signal is delivered through the duplexer 169 to a leaky cable 171 as a signal for the down channels. The cable 171 is preferably a coaxial cable having a spirally indented periphery so as to leak transmitted signals.

The cable 171 is thus usually supplied with frequency-multiplexed video signals V from the VTRs 111 to 113 and the units 114, 115 as well as encoded audio signals L, R and A reproduced from the VTRs 111 to 113, the units 114, 115 and the CD players 121 to 129, and programs and data from the cartridges 141 to 148 which are time-division-multiplexed before they are frequency-multiplexed.

To make an announcement in the cabin, the announce switch 132A is turned on. Actuation of the switch 132A automatically generates a control signal for placing the VTRs 111 to 113, the units 114, 115 and the CD players 121 to 129 into a pause mode, muting the circuits for reproducing their signals, and setting a switching circuit 116 into the state shown in Figure 1A so that a voice signal from the microphone 131 is supplied from the AV control unit 132 through the switching circuit 116 to the modulator 161 to be modulated to an FM signal similar to the audio signal component of an ordinary broadcast television signal. This FM signal is supplied to the adder 168.

In this event, the voice signal from the microphone 131 is also supplied from the AV control unit 132 to the encoder 151, and the controller 105 supplies the encoders 151 and 152 with a command signal indicative of an announce mode on the basis of a signal supplied from the AV control unit 132 which is indicative of actuation of the announce switch 132A.

When an announcement is made in the cabin, a voice signal representative of the announcement is added to the signals normally supplied to the adder 168 and a command signal indicative of the announce mode is delivered by the modulator 161 and the encoder 151.

When the announce switch 132A is turned off, the system is returned to the normal operating mode described above.

When the override switch 132B is turned on to effect an override operation, the VTRs 111 to 113, the units 114, 115 and the CD players 121 to 129 are set into a pause state and the VTR 110 is set into a reproducing state by a control signal from the AV control unit 132, and the switching circuits 116 and 117 are set into a state opposite the state shown in Figure 1A by a control signal from the AV control unit 132 so that the reproduced signals V, L, R and A from the VTR 110 are supplied to the modulator 161 and the encoder 151.

In this event, the controller 105 supplies the encoders 151 and 152 with a command signal indicative of an override mode in response to a signal supplied from the AV control unit 132 which is indicative of actuation of the override switch 132B.

Thus, when an override operation is effected, the reproduced signals V, L, R and A from the VTR 110 are transmitted in place of those signals from the VTR 111 which are transmitted during the system's normal operating mode, and a command signal indicative of the override mode is also transmitted.

When the announce switch 132A is turned on during an override operation, the switching circuit 116 and the encoders 151 and 152 are controlled in such a manner that the voice signal from the microphone 131 is transmitted in preference to the audio signals L, R and A from the VTR 110.

A terminal unit 200 is provided for each passenger seat, and the cable 171 is arranged adjacent the passenger seats.

In the terminal unit 200 shown in more detail in Figure 1B, a transmitting and receiving antenna (or "coupler") 201 is arranged in the vicinity of the cable 171 so as to couple inductively with the cable 171 for transmitting and receiving signals to and from the transmitter 100 and the terminal unit 200.

A tuner 203, connected to the antenna 201 via a duplexer 202, selects any desired one of the modulated signals from the modulators 161 to 165 and demodulates the original video signal V (and the audio signal A) from the selected modulated signal. A tuner 204 selects either desired one of the modulated signals from the modulators 166 and 167, and demodulates the original time-division-multiplexed signal (that is, the time-division-multiplexed signal from either of the encoders 151, 152) from the selected modulated signal.

A CADA decoder 205 performs the inverse operations to the operations performed in the encoders 151 and 152. A selection indicating apparatus 206 preferably has a colour display 61, and a variety of operational switches and connectors to which headphones 207 and a joy stick 208 can be connected.

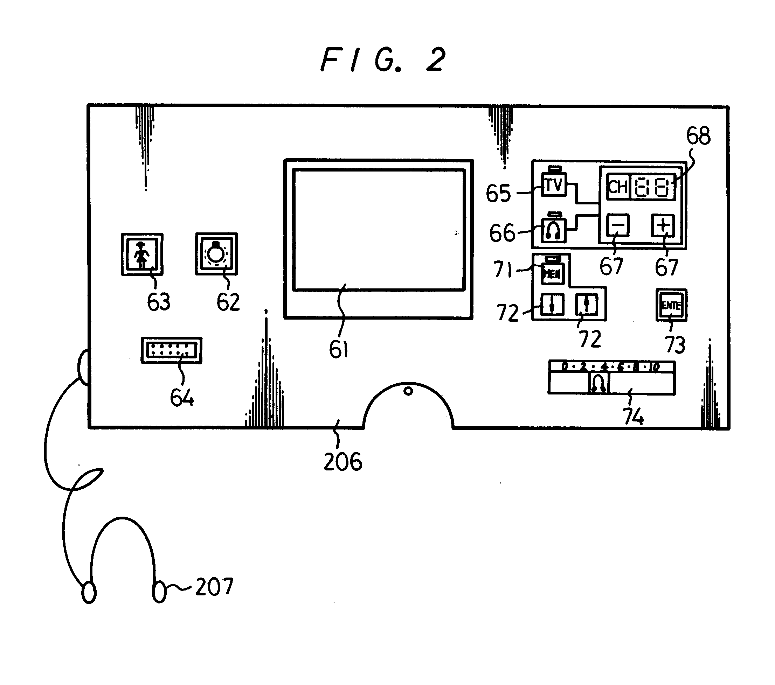

A personal computer 209, which may be a personal computer of, for example, the MSX standard, performs display processing for the colour display 61. Each terminal unit 200 of the Figure 1B system also includes a passenger service unit (PSU) 211, a reading light 212, an attendant call light 213, a sensor 214 for detecting passenger conditions, such as whether a passenger is sitting on a particular seat, whether the seat belt at each is correctly fastened, or the like, a transmitter 219 for the up channels, a microcomputer 220 for controlling the complete terminal unit 200, and an address generator 221 for generating the address of the terminal unit 200 at which the address generator is located. Each PSU 211 also includes a switch unit (not shown in Figure 2B) for controlling each of the lights 212 and 213.

Figure 2 shows a preferred embodiment of the selection indicating apparatus 206 of the Figure 1B system. The colour display 61 may be, for example, an index-beam type flat television picture tube (CRT). The selection indicating apparatus 206 also includes a reading light switch 62, an attendant call switch 63, and a connector 64 to which the joy stick 208 (shown in Figure 1B) may be connected.

A television switch 65 selects the reproduced signals V , L, R and A from the VTRs 111 to 113 or the units 114, 115, a music switch 66 selects the reproduced signals L, R from the CD players 121 to 129, channel up and down switches 67 select desired ones of the reproduced signals (channels) selected by the switch 65 or the switch 66, and an indicator 68 digitally indicates a channel number corresponding to a channel selected by the switches 67.

A menu switch 71 displays a menu on the display 61, cursor keys (switches) 72 move a cursor up and down on the display 61, an enter key 73 validates an item specified by the cursor, and a sliding adjuster 74 adjusts the sound volume of the headphones 207.

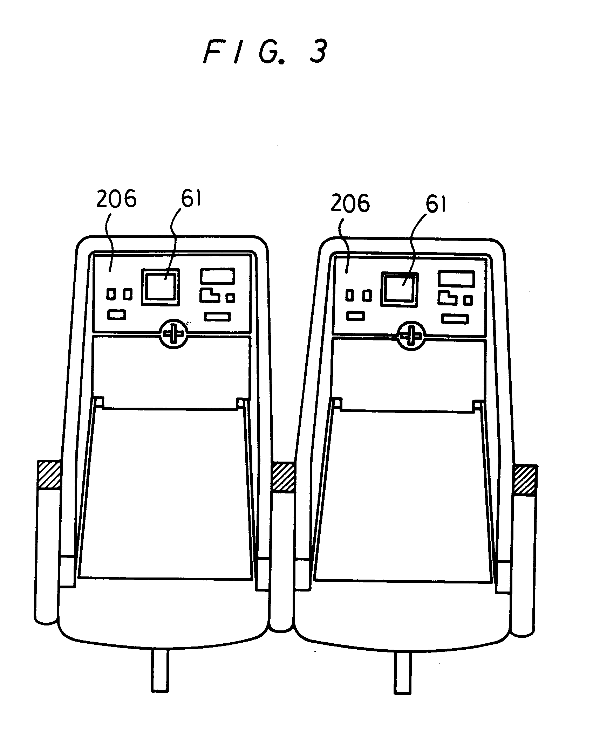

Each selection indicating apparatus 206 is preferably installed on the back of a passenger seat in front of the passenger using such apparatus, for example as shown in Figure 3.

In the system's normal operating mode, the frequency-multiplexed signal delivered to the cable 171 is picked up by the antenna 201 and supplied to the tuners 203 and 204 through the duplexer 202.

When the switch 65 is pressed, the terminal unit 200 is set into a television mode. Next the channel up/down switches 67 are pressed to select one of the output signals from the modulators 161 to 165, that is, one of the reproduced signals V from the VTRs 111 to 113 or the units 114, 115. The act of pressing the switches 67 causes the tuner 203 to supply the selected signal V to the display 61. At the same time, one of the output signals from the modulators 166 and 167 is selected in the tuner 204 and the output signal from the appropriate one of the encoders 151 and 152 is supplied to the decoder 205 wherein the audio signals L, R and A of the channel selected by the switches 67 are decoded and supplied through the selection indicating apparatus 206 to the headphones 207.

Thus, by repeatedly operating the switches 65 and 67, the passenger can select a desired one from the signals reproduced from the VTRs 111 to 113 or the units 114, 115.

When the switch 66 is pressed, the terminal unit 200 is set into a music mode. After the switch 66 has been pressed, one of the output signals from the modulators 166 and 167 is selected in the tuner 204 by pressing the switches 67 and the output signal from the appropriate one of the encoders 151 and 152 is supplied to the decoder 205 wherein audio signals L, R and A of the channel selected by the switches 67 (that is, the output of the one of the CD players 121 to 129 selected by the switches 67) are decoded, and the signals L, R are supplied through the apparatus 206 to the headphones 207.

When the menu switch 71 is pressed, the menu program and related data stored in the cartridge 148 are supplied from the decoder 205 to the personal computer 209 for executing the menu program. Consequently, the display 61 displays the menu. By moving the cursor to a desired game name in the menu using the cursor keys 72 and then pressing the enter key 73, the selected game program, that is, one of the programs provided in the cartridges 141 to 147 is loaded from the decoder 205 into the personal computer 209. Thereafter, the passenger can play the game, for example by using the joy stick 208.

As described above, the passengers can freely utilise the VTRs 111 to 113, the units 114, 115, the CD players 121 to 129 and the game programs in the cartridges 141 to 147 in the system's normal operating mode.

A signal including data indicative of software usage at each terminal unit 200 is sent automatically from the microcomputer 220 to the transmitter 219 to be transmitted over the up channel. Each such signal is then supplied through the duplexer 202, the antenna 201, the cable 171, and the duplexer 169 to the decoder 106 wherein the original software usage data is decoded. The data thus decoded is supplied through the controller 105 to the master control unit 101 for use in monitoring and managing the software usage at each seat.

When the announce mode is effected, a command signal indicative of the announce mode is delivered through the down channel to each of the terminal units 200. The command signal is decoded in each decoder 205. The decoder 205 is forced by the command signal to select the channel through which the announce voice signal is transmitted from the microphone 131 through the encoder 151 to the terminal units 200. This voice signal is supplied to the headphones 207. During an announce operation, the volume of the signal at the headphones 207 may be controlled so as to be unaffected by the position of the volume sliding adjuster 74.

If the encoder 151, the encoder 152, or the decoder 205, is disabled due to a malfunction or the like, the announce audio signal A from the modulator 161 is automatically selected.

Also during the announce mode, a video signal V representative of an image corresponding to the announcement may be extracted from the CD-ROM reproducer 115 and forcedly received by the tuner 203. Then, the video signal V is supplied to the display 61 to display a still image corresponding to the announcement.

When an announce operation is terminated, each terminal unit 200 is returned to the state it was in before the announce mode, in response to receipt of a command signal indicating termination of the announce operation.

When an override operation is effected, the signals V, L, R and A from the VTR 110 are forcedly selected by a command signal indicative of the override operation, in the same manner as for the announce operation. The signal V is supplied to the display 61 and the signals L, R and A to the headphones 207.

Further, when the reading light switch 62 is pressed, the microcomputer 220 generates a request signal which indicates the number of the seat at which the reading light switch 62 has been pressed. An address from the address generator 221 is added to the request signal and the request signal (with address) is transmitted to the controller 105 through the up channel. The controller 105 generates a command signal (including the seat number) for lighting the reading light 212 corresponding to the seat number on the basis of the request signal transmitted thereto. The command signal for lighting the reading light 212 is transmitted through the down channel to the terminal units 200. The decoder 205 of the terminal unit at which the reading light switch 62 has been pressed detects the coincidence between its seat number and the seat number included in the command signal for lighting the reading light 212 and decodes the command signal. The decoded command signal is then supplied to the PSU 211 to control a switch therein to turn on the reading light 212.

At this time, the controller 105 supplies the master control unit 101 with data indicating that the reading light switch 62 has been pressed and with data indicative of the seat number of the corresponding seat so that the master control unit 101 may collect and process information regarding which of the reading lights 212 have been lighted and which have been extinguished. This information may be displayed on the display 103 so that the crew can quickly confirm at which seats the reading lights 212 are lit.

A request signal for extinguishing a desired one of the reading lights 212 is generated by pressing the reading light switch 62 again. The process for extinguishing the reading light 212 is the same as that described above for turning on the reading light 212.

If a request signal for turning on or off a certain reading light 212 is entered using the keyboard 102 and supplied from the keyboard 102 to the controller 105, a command signal is generated in the controller 105. This command signal, which includes a command to turn on or off the reading light 212 and the corresponding seat number, is supplied through the down channel to the corresponding terminal unit 200, and the appropriate reading light 212 is turned on or off in response to the signal. Accordingly, a reading light or the like at each seat can be controlled from the master control unit 101.

Also, when the attendant call switch 63 is pressed, the call light 213 is lit, and the attendant call requests are processed by the controller 105 and the master control unit 101 and displayed on the display 103 in the same manner as when the reading light switch 62 is pressed to turn the reading light 212 on or off.

Therefore, the crew can quickly determine by examining the display 103 each seat at which the attendant call switch 63 has been pressed without going to the passenger cabin.

Moreover, the seat condition detected by each sensor 214 is also transmitted to the controller 105 with the corresponding seat number for forwarding to the control unit 101 for processing.

As described above, when a passenger operates the switch 62 or the switch 63, the transmitter 100 centrally processes each passenger request signal (which may be a request for controlling one of the lights 212, 213). Since the transmitter 100 centrally monitors and processes the passenger request signals, the passenger requests can be quickly detected and promptly acted upon.

The passenger requests are centrally monitored by the display 103, (that is, each passenger's seat is provided with an attendant call light whose status is monitored by the display 103), so that it is possible to determine easily which passenger has requested service and accordingly improve the services provided to the passengers.

Further, since the service system as described above is preferably combined with a passenger audio/video system, the combined system is simpler and has broader capability than if the two systems were to be provided separately.

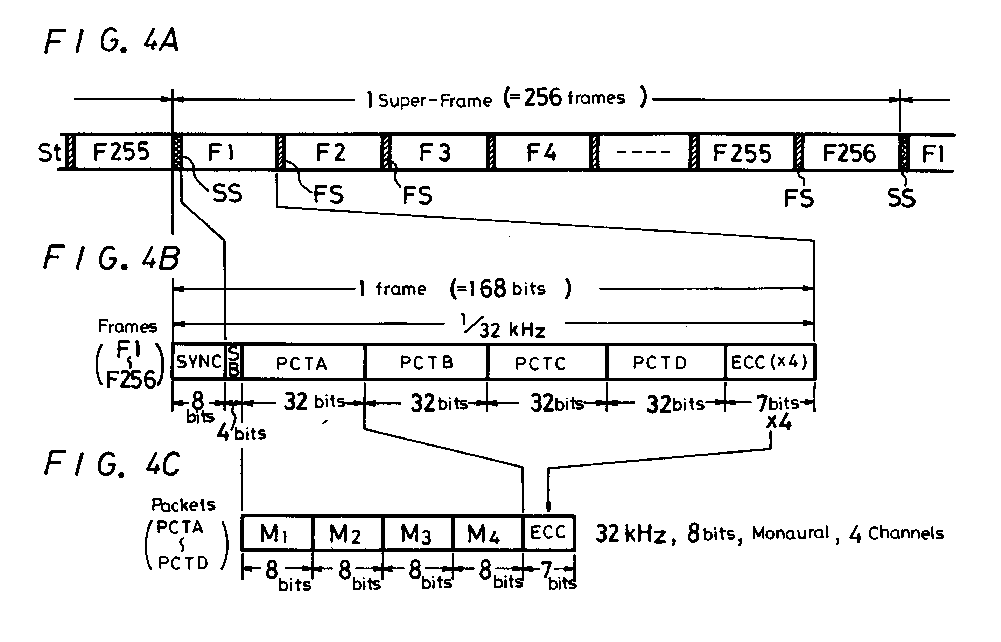

Next, the signal format of the time-division-multiplexed signals supplied by the encoders 151 and 152 will be explained with reference to Figures 4A to 4C. The signal format is an improvement of that disclosed in the aforementioned US Patent No. US-A-4 684 981.

A multiplexed signal St shown in Figure 4A is a serial binary signal formed of a number of super-frames. One super-frame thereof is formed of 256 frames F1 to F256. As shown in Figure 4B, each frame includes 168 bits and the cyclic period of one frame is $(32 \text{ kHz})^{-1}$. Each frame has an 8-bit synchronising code SYNC, followed by a 4-bit service bit SB, followed by four 32-bit data packets PCTA to PCTD, followed by four 7-bit error correcting codes (ECCs).

There are two kinds of synchronising code SYNC as shown in Figure 4A; a super-frame-sync SS for the frame F1 at the head of the super-frame and a frame-sync FS for the subsequent 255 frames F2 to F256. The bit patterns of the super-frame-sync SS and the frame-sync FS are selected to differ from each other.

The service bits SB, the details of which will be provided below, are grouped into four groups each including 77 bits. Each service bit contains data such as a command, a seat number, and the like.

Each of the data packets PCTA to PCTD is formed of 32 bits and is independent of the others. As shown in Figure 4C, each of the packets PCTA to PCTD is divided into four channels M1 to M4, each being formed of 8 bits. Each of the channels M1 to M4 contains a PCM signal obtained by sampling the audio signals L, R and A at a frequency of 32 kHz.

Since one frame contains four packets PCTA to PCTD and each packet has four channels M1 to M4, 16-channel audio signals can be simultaneously transmitted in time-division multiplexed form by the use of one signal St. Each channel is sampled at a sampling frequency of 32 kHz and encoded in 8 bits, so that it complies with the PCM audio standard of an 8 mm VTR.

Data signals from the memory cartridges 141 to 148 are converted into a time-division multiplexed bit sequence signal by the multiplexer 149 (shown in Figure 1A). The time-division multiplexed signal output from the multiplexer 149 is used as one channel of the 16-channel signals. The signal output from the multiplexer 149 is cyclic, so that when the last bit of data from the memory cartridges 141 to 148 is transmitted, the first bit of the data is retransmitted.

Each channel of the Figure 4C signal is formed of eight bits, and eight memory cartridges 141 to 148 are provided. Accordingly, in the channel for transmitting data from the cartridges 141 to 148, each of the first bit to the eighth bit of the channel corresponds to data from a different one of the memory cartridges 141 to 148. Therefore, the transmission rate of data from each memory cartridge is 32 kbps.

The four error correcting codes ECCs respectively correct errors which may occur in the data packets PCTA to PCTD.

Since the signal St has a format determined as described above, the bit transmission rate thereof can be calculated as follows:

$$168 \text{ bits} \times 32 \text{ kHz} \simeq 5.4 \text{ Mbps}.$$

One half of the calculated value is the Nyquist frequency, so that the signal St can be transmitted in a video signal bandwidth.

As described above, each of the encoders 151 and 152 can time-division-multiplex sixteen channels of audio signals, and the time division-multiplexed signal can be frequency-multiplexed with other video signals.

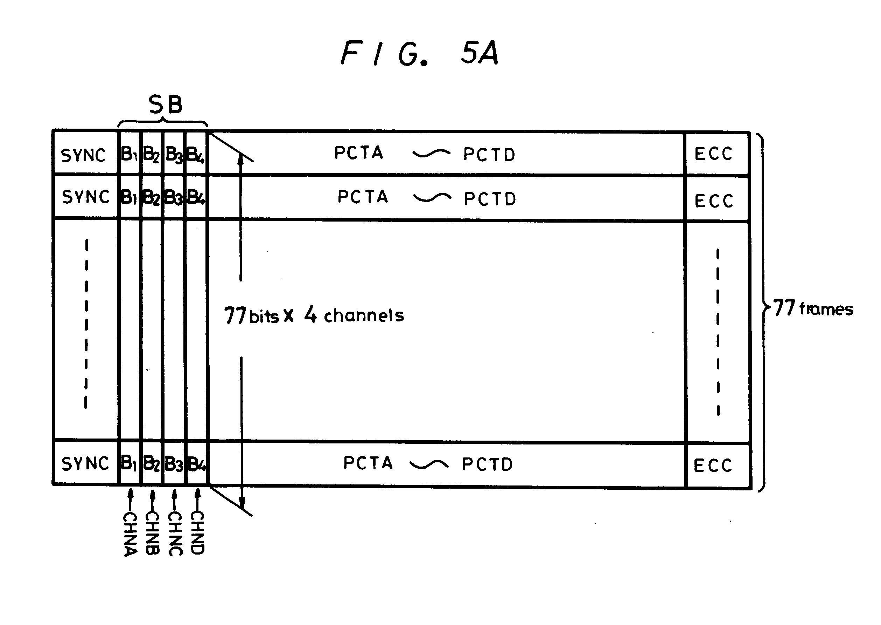

The service bits SB are preferably used in groups having a format as shown in Figures 5A to 5D. To be specific, four service bits SB are provided for every frame, and may be designated $B_1$ to $B_4$. Assuming that 77 continuous frames are vertically aligned as one group, as schematically shown in Figure 5A, the service bits SB for this group have a dimension of 77 vertical bits by 4 horizontal bits.

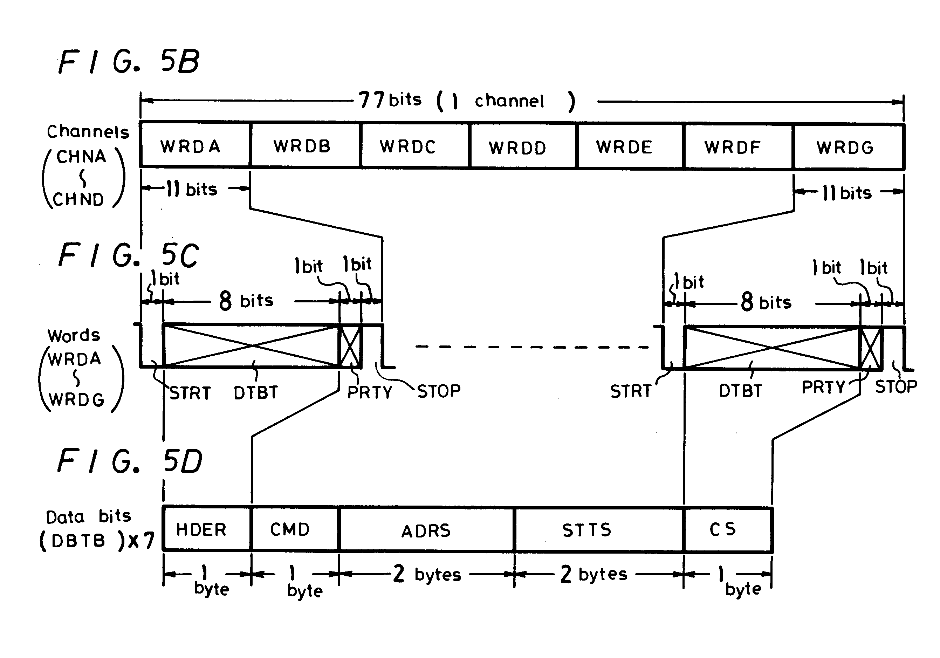

As shown in Figure 5B, the service bits SB may be vertically grouped so that each set of 77 bits is designated as one channel. A first such channel CHNA includes 77 bits $B_1$ and second to fourth such channels CHNB to CHND include bits $B_2$s to $B_4$s, respectively.

Each of the channels CHNA to CHND is divided into seven words WRDA to WRDG, each being formed of 11 bits as shown in Figure 5B. Each word has its first bit set to "0" level and used as a start bit STRT, the subsequent eight bits are used as data bits DTBT, the next one bit used as a parity bit PRTY, and the last one bit determined to be "0" level and used as a stop bit STOP, as shown in Figure 5C.

There is one data bit DTBT for each word in each of the channels CHNA to CHND, and there are seven words for each 77 frames. Therefore, there are seven data bits (seven bytes) for the 77 frames. Accordingly, there are 7 bytes x 4 channels of the data bits DTBTs in all.

As shown in Figure 5D, the second channel CHNB has its first byte set in a predetermined bit pattern ("AA" in hexadecimal) and is used as a header HDER; its second byte is used as a command CMD for identifying a maximum of 256 kinds of commands; the third and fourth bytes are used as an address ADRS indicative of a seat number (or a number identifying a particular terminal unit); the fifth and sixth bytes are used as status information STTS indicative of data or parameters incident to the command CMD; and the last byte is used as a check sum CS.

Thereafter, the transmitter 100 can specify desired ones of the terminal units 200 and control the operation of each corresponding reading light 212 and attendant call light 213 by use of the data bit DTBT in the channel CHNB.

Since there is only one up channel for random data, the data bit DTBT of the first channel CHNA is used as a flag indicative of use or non-use of the up channel for the random data. The flag is set when the random data of the up channel is used. Therefore, each terminal unit 200 judges whether or not the up channel for random data can be used by assessing the data bit DTBT of the channel CHNA. If the channel is in use, the terminal unit 200 delays transmission of a command (and data) to the transmitter 100 until the channel has become vacant.

The third and fourth channels CHNC and CHND are not defined.

In the up channel, the above-mentioned service bits SB are transmitted in the formats shown in Figures 5B to 5D at a bit rate of 32 kbps, equal to that of the down channel transmission, in the PSK signal condition.

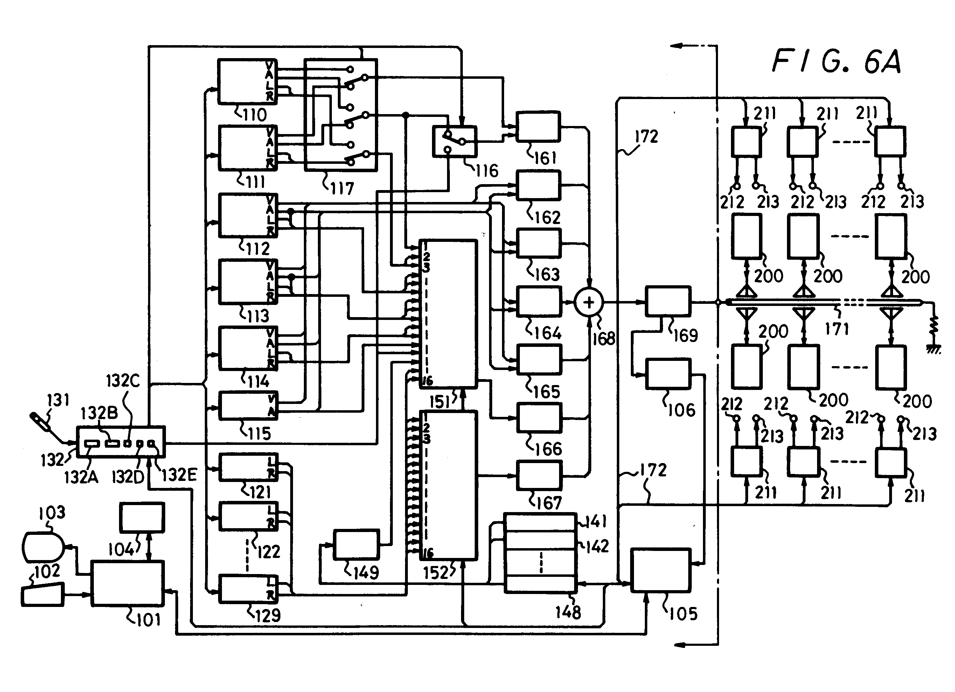

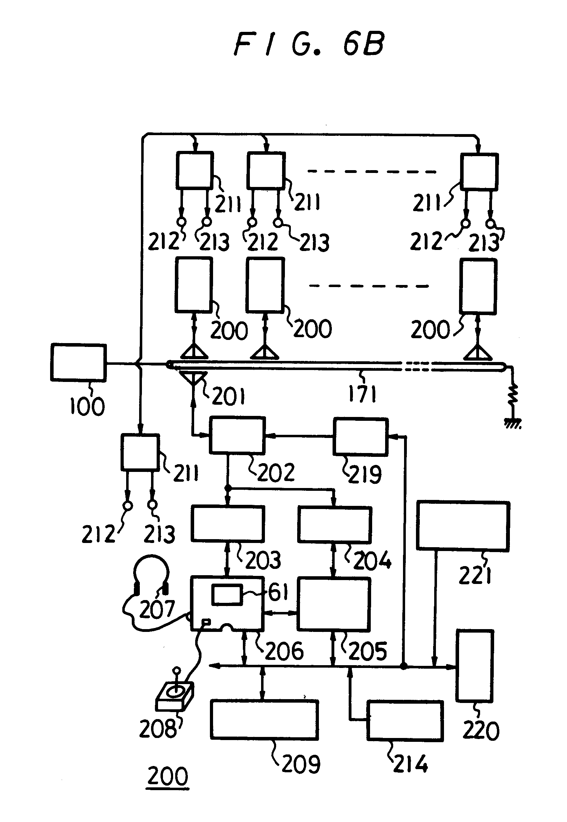

Next, another embodiment of the present invention will be described with reference to Figures 6A and 6B. The parts in these drawings corresponding to those in Figures 1A and 1B are designated by the same reference numerals and explanation thereof will be omitted.

In Figures 6A and 6B, the PSU 211 and the lights 212 and 213 are provided independently of the terminal unit 200, and control signals for controlling the lights 212 and 213 are supplied to the PSU 211 through a cable line 172 (see Figure 6A) provided in addition to the leaky cable 171. Each PSU 211 includes a switch unit for controlling at least one of the reading lights and at least one of the attendant call lights, is preferably installed on the ceiling above the seats or on a wall adjacent one or more of the seats, and has an address identifying function. Each control signal for controlling the lights 212 and 213 is supplied directly from the controller 105 through the cable line 172 to the PSU 211. Each control signal for the lights 212 and 213 includes a signal indicative of the seat address for the relevant light so that the corresponding PSU 211 turns on or off the corresponding one of the lights 212 and 213 upon detecting the control signal having the appropriate address. The embodiment shown in Figures 6A and 6B otherwise operates in the same manner as the embodiment of Figures 1A and 1B so that further explanation of its manner of operation will not be repeated.

Although the embodiment of Figures 6A and 6B includes the additional cable line 172, it has the advantage that each control signal for the lights 212 and 213 can be rapidly and accurately transmitted even when the cable 171 is being heavily used.

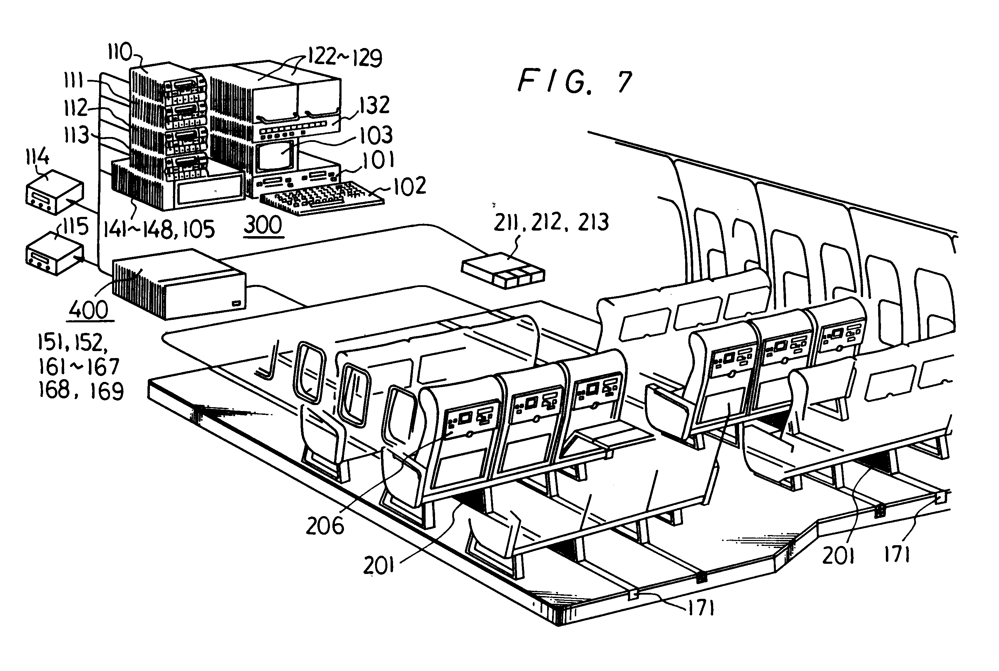

Figure 7 shows a preferred embodiment of the service system when installed in a cabin of an aircraft. The components in Figure 7 corresponding to those in Figures 1A and 6A are designated by the same reference numerals. The cartridges 141 to 148 and the controller 105 of Figures 1A and 6A are accommodated in a box 300, and the encoders 151 and 152, the modulators 161 to 167, the adder 168 and the duplexer 169 are accommodated in a box 400.

According to the service system as described above, when a passenger operates the switches 62 and 63, the transmitter 100 centrally processes signals generated in the passenger's terminal unit in response to operation by the passenger of the switches 62 and 63 thereby to control the lights 212 and 213, and centrally monitors and processes the signals received from the passenger's terminal unit so that the passenger's requests can be quickly detected and promptly responded to.

The passenger's requests are centrally monitored by the display 103 (specifically, each passenger's seat is provided with an attendant call light 213 whose status is monitored by the display 103), so that it is possible easily to determine which passenger has requested a service and accordingly to improve services in the passenger cabin.

Further, in a preferred embodiment in which the service system is incorporated and combined with an audio/video system, the combined system is simpler than if the two systems were to be provided separately, and may more easily be extended and developed than if the two systems were to be provided separately.

## Claims

1. An aircraft service system comprising:
   a plurality of attendant call lights (213) each serving a different passenger seat in an aircraft;
   a plurality of reading lights (212) each serving a different one of the passenger seats;
   a plurality of switch units (211), each controlling at least one of the attendant call lights (213) and at least one of the reading lights (212);
   a plurality of terminal units (200), each provided at a different one of the passenger seats, each terminal unit (200) having an attendant call key (63), a reading light key (62), means (219) for generating a request signal in response to operation of at least one of the attendant call key (63) and the reading light key (62), and decoder means (205) for decoding encoded signals;
   a central control apparatus (100) including encoder means (151, 152) for encoding signals to be sent to said terminal units (200); and
   means (171) for transmitting signals between the terminal units (200) and the central control apparatus (100);
   characterised in that:
   said terminal units (200) each include means (221) for generating an address identifying one of the passenger seats, such that said generated request signal includes the address;
   said central control apparatus (100) includes a control signal generating means (105) capable of generating an attendant call light control signal in response to each request signal generated in response to operation of one of the attendant call keys (63) and a reading light control signal in response to each request signal generated in response to operation of one of the reading light keys (62), each said control signal generated by said control signal generating means (105) including a seat address identifying one of the lights (212, 213); and
   said switch units (211) are each associated with means (220) for identifying the seat address of each received control signal, and are responsive to the corresponding control signal transmitted from the central control apparatus (100) to control the respective reading light (212) or attendant call light (213).

2. A system according to claim 1, wherein the central control apparatus (100) includes controller means (101) for receiving the request signals from the control signal generating means (105) and processing the request signals for display.

3. A system according to claim 2, wherein the central control apparatus (100) comprises display means (103) connected to said controller means (101) for displaying the processed request signals.

4. A system according to claim 2 or claim 3, wherein the central control apparatus (100) comprises keyboard means (102) connected to said controller means (101) for entering request signals into the controller means (101) for transmittal to the control signal generating means (105), and wherein the control signal generating means (105) is capable of generating a control signal for controlling desired ones of said reading lights (212) in response to each said request signal from the controller means (101).

5. A system according to any one of claims 1 to 4, wherein said signal transmitting means comprises a first cable line (171) for transmitting said request signals and a second cable line (172) for transmitting said control signals.

6. A system according to any one of claim 1 to 4, wherein said signal transmitting means comprises a single cable (171) for transmitting both said request signals and said control signals.

7. A system according to claim 5 or claim 6, wherein the first cable line or the single cable is constituted by a leaky cable (171).

8. A system according to claim 6, wherein each terminal unit (200) is coupled to at least one of the switch units (211), each control signal is transmitted to the terminal units (200) to be selectively forwarded to the appropriate switch units (211), and each terminal unit (200) comprises means (220) for identifying the seat address of each received control signal and means for selectively forwarding to at least one of the switch units (211) coupled to the terminal unit (200) only those received control signals which have a seat address identifying one of the lights (212,213) controlled by said at least one of the switch units (211) coupled to the terminal unit (200).

9. A system according to any one of the preceding claims, wherein each said switch unit (211) is capable of identifying the seat address included in each said control signal.

10. A system according to any one of the preceding claims, wherein the central control apparatus (100) comprises means (110 to 115) for reproducing video signals and means (121 to 129) for reproducing audio signals, wherein said audio signals are encoded by said encoder means (151, 152), and wherein the central control apparatus (100) includes modulator means (161 to 167) for modulating said video signals, said encoded audio signals and said encoded control signals, multiplexing means (168) for multiplexing said modulated video signals, said modulated audio signals and said modulated control signals, aid multiplexing means (168) being connected to said signal transmitting means (171), and wherein each terminal unit (200) comprises means (201) for receiving said multiplexed signals, demodulator means (203,204) for demodulating said video signals, said encoded audio signals and said encoded control signals, and for supplying the demodulated encoded audio signals and the demodulated encoded control signals to the decoder means (205), and wherein the decoder means (205) is capable of decoding said encoded audio signals and said encoded control signals, means (61) for displaying the demodulated and decoded video signals, and an audio output terminal for receiving the demodulated and decoded audio signals.

11. A system according to claim 10, wherein the central control apparatus (100) comprises memory means (141 to 148) for storing television game software, wherein said encoder means (151,152) is capable of encoding said television game software, said modulator means (161 to 167) is capable of modulating said television game software, and said multiplexing means (168) is capable of multiplexing said encoded television game software with the modulated video signals, encoded audio signals, and encoded control signals, and wherein each terminal unit (200) comprises means (204) for demodulating the television game software, and means (209) for processing the demodulated and decoded television game software.

12. A system according to claim 10 or claim 11, wherein each terminal unit (200) includes a panel (206) in which the attendant call key (63), the reading light key (62), the display means (61) and the audio output terminal are provided.

13. A system according to claim 12, wherein at least one of said panels (206) is provided on the rear side of one of said passenger seats.

14. An aircraft service method including the steps of:

at each of a plurality of terminal units (200) provided at a respective plurality of passenger seats, generating a request signal identifying at least one of an attendant call light (213) and a reading light (212) serving the passenger seat at which the terminal unit (200) is provided;

transmitting each request signal from the terminal unit (200) at which it is generated to a central control apparatus (100); and

in response to each request signal, controlling a respective one of a plurality of switch units (211), each provided at a respective one of the plurality of passenger seats, and each being capable of controlling at least one of the reading lights (212) and at least one of the attendant call lights (213);

characterised in that:

in response to each request signal, a control signal is generated at the central control apparatus (100) and is transmitted to the switch units (211);

each generated request signal includes an address identifying one of the passenger seats;

each control signal generated at the central control apparatus (100) includes a seat address identifying the light (212, 213) identified by the request signal;

each control signal is digitally encoded at the central control apparatus (100), and decoded at each terminal unit (200);

at each switch unit (211), each received control signal is processed to identify the seat address included in said received sig-

nal; and

each light (212,213) identified by one of the seat addresses is controlled as identified by the received control signal processing step.

15. A method according to claim 14, wherein each switch unit (211) is coupled to one of the terminal units (200), and including the steps of:

at each terminal unit (200), receiving and decoding each transmitted control signal and identifying the seat address included in each transmitted control signal; and

at each terminal unit (200) at which a seat address identifies one of the lights (212,213) controlled by the switch unit (211) coupled to said terminal unit (200), supplying the decoded control signal to the switch unit (211) coupled to said terminal unit (200).

16. A method according to claim 14, wherein each request signal is transmitted to the central control apparatus (100) over a first cable line (171), and wherein each encoded control signal is transmitted from the central control apparatus (100) to the switch units (211) over a second cable line (172).

17. A method according to claim 14, wherein the request signals and the encoded control signals are transmitted to and from the central control apparatus (100) over a common cable (171).

18. A method according to claim 16 or claim 17, wherein the first cable line or the common cable is constituted by a leaky cable (171).

**Patentansprüche**

1. Flugzeug-Dienststellenanlage mit:
mehreren Begleiterruflichtern (213), von denen jedes für einen anderen Passagiersitz in einem Flugzeug dient,
mehreren Leselichtern (212), Von denen jedes für einen anderen der Passagiersitze dient,
mehreren Schalteinheiten (211), von denen jede wenigstens eines der Begleiterruflichter (213) und wenigstens eines der Leselichter (212) steuert,
mehreren Endgeräten (200), von denen jedes an einem anderen der Passagiersitze vorgesehen ist, wobei jedes Endgerät (200) eine Begleiterruftaste (63), eine Leselichttaste (62), eine Einrichtung (219) zum Erzeugen eines Anforderungssignals in Abhängigkeit von einer Betätigung wenigstens einer der Begleiterruftasten (63) und/oder wenigstens einer der Leselichttasten (62) und eine Dekodiereinrichtung (205) zum Dekodieren kodierter Signale aufweist,
einem zentralen Steuergerät (100) mit einer Kodiereinrichtung (151, 152) zum Kodieren von zu den Endgeräten (200) zu sendenden Signalen, und
einer Einrichtung (171) zum Übertragen von Signalen zwischen den Endgeräten (200) und dem zentralen Steuergerät (100)
**dadurch gekennzeichnet,**
daß jedes Endgerät (200) eine Einrichtung (221) zum Erzeugen einer einen der Passagiersitze identifizierenden Adresse derart aufweist, daß das erzeugte Anforderungssignal die Adresse enthält,
daß das zentrale Steuergerät (100) eine Steuersignalerzeugungseinrichtung (105) aufweist, die so ausgebildet, daß sie ein Begleiterruflicht-Steuersignal in Abhängigkeit von jedem in Abhängigkeit von einer Betätigung einer der Begleiterruftasten (63) erzeugten Anforderungssignal und ein Leselicht-Steuersignal in Abhängigkeit von jedem in Abhängigkeit von einer Betätigung einer der Leselichttasten (62) erzeugten Anforderungssignal erzeugt, wobei jedes von der Steuersignalerzeugungseinrichtung (105) erzeugte Steuersignal eine eines der Lichter (212, 213) identifizierende Sitzadresse enthält, und
daß die Schalteinheiten (211) mit einer Einrichtung (200) zur Identifizierung der Sitzadresse jedes empfangenen Steuersignals assoziiert sind und auf das von dem zentralen Steuergerät (100) übertragene korrespondierende Steuersignal ansprechen, um das betreffende Leselicht (212) oder Begleiterruflicht (213) zu steuern.

2. Anlage nach Anspruch 1, wobei das zentrale Steuergerät (100) eine Steuereinrichtung (101) zum Empfang des Anforderungssignals von der Steuersignalerzeugungseinrichtung (105) und Verarbeiten des Anforderungssignals für eine Anzeige aufweist.

3. Anlage nach Anspruch 2, wobei das zentrale Steuergerät (100) eine mit der Steuereinrichtung (101) verbundene Anzeigeeinrichtung (103) zum Anzeigen des verarbeiteten Anforderungssignals aufweist.

4. Anlage nach Anspruch 2 oder 3, wobei das zentrale Steuergerät (100) eine mit der Steuereinrichtung (101) verbundene Tastatur (102) zur Eingabe von Anforderungssignalen in die Steuereinrichtung (101) für eine Übertragung zur Steuersignalerzeugungseinrichtung (105) aufweist, und wobei die Steuersignalerzeugungseinrichtung (105) so ausgebildet ist, daß ein Steuersignal zur Steuerung gewünschter Leselichter (212) in Abhängigkeit von dem Anforderungssignal von der Steuereinrichtung (101) erzeugt wird.

5. Anlage nach einem der Ansprüche 1 bis 4, wobei die Signalübertragungseinrichtung eine erste Kabelleitung (171) zum Übertragen der Anforderungssignale und eine zweite Kabelleitung (172) zum Übertragen der Steuersignale aufweist.

6. Anlage nach einem der Ansprüche 1 bis 4, wobei die Signalübertragungseinrichtung ein einzelnes Kabel (171) zur Übertragung sowohl der Anforderungssignale als auch der Steuersignale aufweist.

7. Anlage nach Anspruch 5 oder 6, wobei die erste Kabelleitung oder das einzelne Kabel in Form eines Leckkabels (171) ausgebildet ist.

8. Anlage nach Anspruch 6, wobei jedes Endgerät (200) an wenigstens eine der Schalteinheiten (211) gekoppelt ist, wobei jedes Steuersignal zu den Endgeräten (200) übertragen ist, um wahlweise zu den betreffenden Schalteinheiten (211) befördert zu werden, und wobei jedes Endgerät (200) eine Einrichtung (220) zum Identifizieren der Sitzadresse jedes empfangenen Steuersignals und eine Einrichtung zum wahlweisen Befördern nur der empfangenen Steuersignale, die eine eines der durch wenigstens eine der an das Endgerät (200) gekoppelten Schalteinheiten (211) gesteuerten Lichter (212, 213) identifizierende Sitzadresse aufweisen, zu wenigstens einer der an das Endgerät (200) gekoppelten Schalteinheiten (211), aufweist.

9. Anlage nach einem der vorhergehenden Ansprüche, wobei Jede Schalteinheit (211) fähig ist, die in jedem Steuersignal enthaltene Sitzadresse zu identifizieren.

10. Anlage nach einem der vorhergehenden Ansprüche, wobei das zentrale Steuergerät (100) eine Einrichtung (110 bis 115) zum Wiedergeben von Videosignalen und eine Einrichtung (121 bis 129) zum Wiedergeben von durch die Kodiereinrichtung (151, 152) kodierten Audiosignalen aufweist, und wobei das zentrale Steuergerät (100) eine. Modulatoreinrichtung (161 bis 167) zum Modulieren der Videosignale, der kodierten Audiosignale und der kodierten Steuersignale und eine an die Signalübertragungseinrichtung (171) gekoppelte Multiplexereinrichtung (168) zum Multiplexen der modulierten Videosignale, der modulierten Audiosignale und der modulierten Steuersignale aufweist, wobei jedes Endgerät (200) eine Einrichtung (201) zum Empfang der multiplexten Signale, eine Demodulatoreinrichtung (203, 204) zum Demodulieren der Videosignale, der kodierten Audiosignale und der kodierten Steuersignale und zum Zuführen der demodulierten kodierten Audiosignale und der demodulierten kodierten Steuersignale zu der Dekodiereinrichtung (205), die so ausgebildet ist, daß sie die kodierten Audiosignale und die kodierten Steuersignale dekodiert, und eine Einrichtung (61) zum Anzeigen der demodulierten und dekodierten Videosignale und ein Audioausgabeterminal zum Empfang der demodulierten und dekodierten Audiosignale aufweist.

11. Anlage nach Anspruch 10, wobei das zentrale Steuergerät (100) eine Speichereinrichtung (141 bis 168) zum Speichern von Fernsehspielsoftware aufweist, wobei die Kodiereinrichtung (151, 152) so ausgebildet ist, daß sie die Fernsehspielsoftware kodiert, wobei die Modulatoreinrichtung (161 bis 167) so ausgebildet ist, daß sie die Fernsehspielsoftware moduliert, und wobei die Multiplexereinrichtung (168) so ausgebildet ist, daß sie die kodierte Fernsehspielsoftware mit den modulierten Videosignalen, den kodierten Audiosignalen und den kodierten Steuersignalen multiplext, und wobei jedes Endgerät (200) eine Einrichtung (204) zum Demodulieren der Fernsehspielsoftware und eine Einrichtung (209) zum Verarbeiten der demodulierten und dekodierten Fernsehspielsoftware aufweist.

12. Anlage nach Anspruch 10 oder 11, wobei jedes Endgerät (200) eine Tafel (206), auf welcher die Begleiterruftaste (63), die Leselichttaste (62), die Anzeigeeinrichtung (61) und das Audioausgabeterminal vorgesehen sind.

13. Anlage nach Anspruch 12, wobei wenigstens eine der Tafeln (206) auf der Rückseite eines Passagiersitzes vorgesehen ist.

14. Flugzeug-Dienstverfahren mit den Schritten, daß an jedem von mehreren an mehreren Passagiersitzen vorgesehenen Endgeräten (200) ein Anforderungssignal erzeugt wird, welches wenigstens ein Begleiterruflicht (213) und/oder wenigstens ein Leselicht (212) identifiziert, das Tür den Passagiersitz, an welchem das Endgerät (200) vorgesehen ist, dient, daß jedes Anforderungssignal aus dem Endgerät (200), an welchem es erzeugt wird, zu einem zentralen Steuergerät (100) übertragen wird, und

daß in Abhängigkeit von jedem Anforderungssignal eine von mehreren Schalteinheiten (211) gesteuert wird, von denen jede an einem der mehreren Passagiersitze vorgesehen und so ausgebildet ist, daß sie wenigstens eines der Leselichter (212) und/ wenigstens eines der Begleiterruflichter (213) steuert,

**dadurch gekennzeichnet,**

daß in Abhängigkeit von jedem Anforderungssignal ein Steuersignal an dem zentralen Steuergerät (100) erzeugt und zu den Schalteinheiten (211) übertragen wird,

daß jedes erzeugte Anforderungssignal eine einen der Passegiersitze identifizierende Adresse enthält,

daß jedes der an dem zentralen Steuergerät (100) erzeugte Steuersignal eine das durch das Anforderungssignal identifizierte Licht (212, 213) identifizierende Sitzadresse enthält,

daß jedes Steuersignal an dem zentralen Steuergerät (100) digital kodiert und an jedem Endgerät (200) dekodiert wird,

daß an jeder Schalteinheit (211) jedes empfangene Steuersignal so verarbeitet wird, daß die in dem empfangenen Steuersignal enthaltene Sitzadresse identifiziert wird, und

daß jedes durch eine der Sitzadressen identifizierte Licht (212, 213) so gesteuert wird, wie es durch den Verarbeitungsschritt für das empfangene Steuersignal identifiziert wird.

15. Verfahren nach Anspruch 14, wobei jede Schalteinheit (211) an eines der Endgeräte (200) gekoppelt wird, und mit den Schritten,

daß jedes Endgerät (200) jedes übertragene Steuersignal empfängt und dekodiert und die in jedem übertragenen Steuersignal enthaltene Sitzadresse identifiziert, und

daß jedes Endgerät (200), an welchem eine Sitzadresse eines der durch die an das Endgerät (200) gekoppelte Schalteinheit (211) gesteuerten Lichter (212, 213) identifiziert, das dekodierte Steuersignal der an das Endgerät (200) gekoppelten Schalteinheit (211) zuführt.

16. Verfahren nach Anspruch 14, wobei jedes Anforderungssignal zum zentralen Steuergerät (100) über eine erste Kabelleitung (171) übertragen wird, und wobei jedes kodierte Steuersignal von dem zentralen Steuergerät (100) zu den Schalteinheiten (211) über eine zweite Kabelleitung (172) übertragen wird.

17. Verfahren nach Anspruch 14, wobei die Anforderungssignale und die kodierten Steuersignale zu und von dem zentralen Steuergerät (100) über ein gemeinsames Kabel (171) übertragen werden.

18. Verfahren nach Anspruch 16 oder 17, wobei die erste Kabelleitung oder das gemeinsame Kabel durch ein Leck- oder Abzweigungskabel (171) gebildet werden.

**Revendications**

1. Système de services d'avion, comprenant :

une pluralité de lumières (213) d'appel d'hôtesse, chacune desservant un siège passager différent dans un avion ;

une pluralité de lumières (212) de lecture, chacune desservant un siège différent parmi les sièges passagers ;

une pluralité d'unités de commutation (211), chacune contrôlant au moins l'une des lumières (213) d'appel d'hôtesse, et au moins une des lumières (212) de lecture ;

une pluralité d'unités terminales (200), chacune étant disposée pour l'un différent des sièges passagers, chaque unité terminale (200) comportant une touche (63) d'appel d'hôtesse, une touche (62) de lumière de lecture, des moyens (219) pour engendrer un signal de demande en réponse à l'enfoncement de l'une des touches (63, 62) d'appel d'hôtesse et de lumière de lecture, et des moyens décodeurs (205) pour décoder le signal encodé ;

un appareil de contrôle central (100) comprenant des moyens encodeurs (151, 152) pour encoder des signaux à émettre vers lesdites unités terminales (200) ;

des moyens (171) pour transmettre des signaux entre les unités terminales (200) et l'appareil de contrôle central (100) ;

caractérisé en ce que :

lesdites unités terminales (200) comportent chacune des moyens (221) pour engendrer une adresse identifiant l'un des sièges passagers de telle sorte que ledit signal de requête généré comporte l'adresse ;

ledit appareil de contrôle central (100) comporte des moyens générateurs (105) d'un signal de contrôle susceptible de générer un signal de contrôle de lumière d'appel d'hôtesse en réponse à chaque signal de requête généré en réponse à l'enfoncement de l'une des touches d'appel d'hôtesse (63), et un signal de contrôle de lumière de lecture en réponse à chaque signal de requête généré en réponse à l'enfoncement de l'une des touches de lumière de lecture (62), chacun des dits signaux de contrôle générés par lesdits générateurs (105) de signal de contrôle comprenant une adresse de siège identifiant l'une des lumières (212, 213) ; et

lesdites unités de commutation (211) sont chacune associées à des moyens (220) pour identifier l'adresse de siège de chaque signal de contrôle reçu, et sont sensibles au signal de contrôle correspondant transmis par l'appareil de contrôle central (100) pour contrôler la lumière de lecture (212) ou la lumière d'appel d'hôtesse (213) concernée.

2. Système selon la revendication 1, dans lequel l'appareil de contrôle central (100) comporte des moyens contrôleurs (101) pour recevoir les signaux de requête provenant des moyens générateurs de signal de contrôle (105) et de traitement des signaux de requête pour affichage.

3. Système selon la revendication 2, dans lequel l'appareil (100) de contrôle central comporte des moyens d'affichage (103) connectés aux dits moyens de contrôle (101) pour afficher les signaux de requête traités.

4. Système selon la revendication 2 ou la revendication 3, dans lequel l'appareil de contrôle central (100) comporte un clavier (102) connecté aux dits moyens de contrôle (101) pour entrer des signaux de requête sur les moyens de contrôle (101) pour transmission aux moyens générateurs de signal de contrôle (105), et dans lequel les moyens générateurs de signal de contrôle (105) sont capables de générer un signal de contrôle pour commander l'une quelconque des dites lumières de lecture (212) en réponse à chacun des dits signaux de requête provenant des moyens de contrôle (101).

5. Système selon l'une quelconque des revendications 1 à 4, dans lequel lesdits moyens de transmission de signal comportent un premier câble (171) pour transmettre lesdits signaux de requête et un second câble pour transmettre lesdits signaux de commande.

6. Système selon l'une quelconque des revendications 1 à 4, dans lequel lesdits moyens de transmission de signal comportent un câble unique (171) pour transmettre à la fois lesdits signaux de requête et lesdits signaux de commande.

7. Système selon la revendication 5 ou la revendication 6, dans lequel le premier câble ou le câble unique est constitué par un câble shunté (171).

8. Système selon la revendication 6, dans lequel chaque unité terminale (200) est couplée à au moins l'une des unités de commutation (211), chaque signal de contrôle est transmis aux unités terminales (200) pour être envoyé sélectivement vers les unités de commutation appropriées (211), et chaque unité terminale (200) comporte des moyens (220) pour identifier l'adresse de siège de chaque signal de contrôle reçu, et des moyens pour émettre sélectivement vers au moins l'une des unités de commutation (211) couplée à l'unité terminale (200) seulement ceux des signaux de contrôle reçus qui présentent une adresse de siège identifiant l'une des lumières (212, 213) contrôlées par au moins l'une des dites unités de commutation (211) couplée à l'unité terminale (200).

9. Système selon l'une quelconque des revendications précédentes, dans lequel chacune des dites unités de commutation (211) est capable d'identifier l'adresse de siège inclue dans chacun des dits signaux de contrôle.

10. Système selon l'une quelconque des revendications précédentes, dans lequel l'appareil de contrôle central (100) comporte des moyens (110 à 115) pour reproduire des signaux vidéo et des moyens (121 à 129) pour reproduire des signaux audio, dans lequel lesdits signaux audio sont encodés par lesdits moyens encodeurs (151, 152), et dans lequel l'appareil de contrôle central (100) comporte des moyens modulateurs (161 à 167) pour moduler lesdits signaux vidéo, lesdits signaux audio encodés et lesdits signaux de contrôle encodés, des moyens de multiplexage (168) pour multiplexer lesdits signaux vidéo modulés, lesdits signaux audio modulés et lesdits signaux de contrôle modulés, lesdits moyens multiplexeurs (168) étant connectés aux dits moyens de transmission de signal (171) et dans lequel chaque unité terminale (200) comporte des moyens (201) pour recevoir lesdits signaux multiplexés, des moyens démodulateurs (203, 204) pour démoduler lesdits signaux vidéo, lesdits signaux audio encodés et lesdits signaux de contrôle encodés, et pour fournir les signaux audio encodés démodulés et les signaux de contrôle encodés démodulés aux moyens décodeurs (205) et dans lequel les moyens décodeurs (205) sont capables de décoder lesdits signaux audio encodés et lesdits signaux de contrôle encodés, des moyens (61) pour afficher les signaux vidéo démodulés et décodés, et une borne de sortie audio pour la réception des signaux audio décodés et démodulés.

**11.** Système selon la revendication 10, dans lequel l'appareil de contrôle central (100) comporte des moyens mémoire (141 à 148) pour stocker des logiciels de jeux de télévision, dans lequel lesdits moyens d'encodage (151, 152) sont capables d'encoder lesdits logiciels de jeux de télévision, lesdits moyens modulateurs (161 à 167) sont capables de moduler ledit logiciel de jeu de télévision, et lesdits moyens de multiplexage (168) sont capables de multiplexer lesdits logiciels de jeux de télévision encodés avec les signaux vidéo modulés, lesdits signaux audio encodés et lesdits signaux de contrôle encodés, et dans lequel chaque unité terminale (200) comporte des moyens (204) pour démoduler le logiciel du jeu de télévision, et des moyens (209) pour traiter le logiciel de jeu de télévision décodé et démodulé.

**12.** Système selon l'une des revendications 10 ou 11, dans lequel chaque unité terminale (200) comporte un panneau (206) sur lequel on a disposé une touche d'appel d'hôtesse (63), une touche de lumière de lecture (62), les moyens de visualisation (61) et la borne de sortie audio.

**13.** Système selon la revendication 12, dans lequel au moins ledit panneau (206) est disposé sur la partie arrière de l'un des dits sièges passagers.

**14.** Procédé de services d'avion comprenant les étapes de :

pour chaque unité d'une pluralité d'unités terminales (200) disposées sur une pluralité respective de sièges passagers, générer un signal de requête identifiant au moins une lumière d'appel d'hôtesse (213) et une lumière de lecture (212) desservant le siège passager sur lequel l'unité terminale (200) est disposée ;

transmettre chaque signal de requête provenant de l'unité terminale (200) sur laquelle il est généré vers un appareil de contrôle central(100) ;

en réponse à chaque signal de requête, contrôler l'une respective d'une pluralité d'unités de commutation (211), chacune étant disposée sur l'un respectif de la pluralité de sièges passagers, et chacune étant susceptible de contrôler au moins l'une des lumières de lecture (212) et au moins l'une des lumières d'appel d'hôtesse (213) ;

caractérisé en ce que

en réponse à chaque signal de requête, un signal de contrôle est généré sur l'appareil de contrôle central (100) et est transmis vers les unités de commutation (211) ;

chaque signal de requête engendré comporte une adresse identifiant l'un des sièges passagers ;

chaque signal de contrôle généré sur l'appareil de contrôle central (100) comporte une adresse de siège identifiant la lumière (212, 213) identifiée par le signal de requête ;

chaque signal de contrôle est encodé de manière numérique sur l'appareil de contrôle central (100) et décodé sur chaque unité terminale (200) ;

pour chaque unité de commutation (211), chaque signal de contrôle reçu est traité de façon à identifier l'adresse de siège inclue dans ledit signal de contrôle reçu ; et

chaque lumière (212, 213) identifiée par l'une des adresses de sièges est contrôlée de façon à être identifiée lors de l'étape de traitement du signal de contrôle reçu.

**15.** Procédé selon la revendication 14, dans lequel chaque unité de commutation (211) est couplée à l'une des unités terminales (200) et comprenant les étapes de :

sur chaque unité terminale (200), recevoir et décoder chaque signal de contrôle transmis et identifier l'adresse de siège inclue sur chaque signal de contrôle transmis ; et

sur chaque unité terminale (200) sur laquelle une adresse identifie l'une des lumières (212, 213) contrôlée par l'unité d'interruption (211) couplée à ladite unité terminale (200), fournir le signal de contrôle décodé à l'unité de commutation (211) couplée à ladite unité terminale (200).

**16.** Procédé selon la revendication 14, dans lequel chaque signal de requête est transmis sur l'appareil de contrôle central (100) sur un premier câble (171) et dans lequel chaque signal de contrôle encodé est transmis depuis l'appareil de contrôle central (100) vers les unités de commutation (211) sur un second câble (172).

**17.** Procédé selon la revendication 14, dans lequel les signaux de requête et les signaux de contrôle encodés sont transmis vers et depuis l'appareil de contrôle central (100) sur un câble commun (171).

**18.** Procédé selon la revendication 16 ou la revendication 17, dans lequel le premier câble ou le câble commun est constitué par un câble shunté (171).

**F I G. 1A**

# F I G. 1B

FIG. 2

# F I G. 3

FIG. 4A

1 Super-Frame (= 256 frames)

| St | F255 | F1 | F2 | F3 | F4 | --- | F255 | F256 | F1 |

SS   FS   FS        FS                    FS   SS

FIG. 4B

Frames (F1 ~ F256)

1 frame (= 168 bits) / 1/32 kHz

| SYNC | SB | PCTA | PCTB | PCTC | PCTD | ECC (×4) |

8 bits   4 bits   32 bits   32 bits   32 bits   32 bits   7 bits ×4

FIG. 4C

Packets (PCTA ~ PCTD)

| M1 | M2 | M3 | M4 | ECC |

8 bits   8 bits   8 bits   8 bits   7 bits

32 kHz, 8 bits, Monaural, 4 Channels

# F I G. 5A

SB

| SYNC | B₁ | B₂ | B₃ | B₄ | PCTA $\smile$ PCTD | ECC |
| SYNC | B₁ | B₂ | B₃ | B₄ | PCTA $\smile$ PCTD | ECC |
|  |  |  |  |  | 77 bits × 4 channels |  |
| SYNC | B₁ | B₂ | B₃ | B₄ | PCTA $\smile$ PCTD | ECC |

77 frames

CHNA CHNB CHNC CHND

EP 0 282 183 B1

FIG. 5B

77 bits ( 1 channel )

Channels
( CHNA
〜
CHND )

| WRDA | WRDB | WRDC | WRDD | WRDE | WRDF | WRDG |

←11 bits→                                                                    ←11 bits→

FIG. 5C

1 bit        1 bit  1 bit                              1 bit        1 bit  1 bit

8 bits                                                 8 bits

Words
( WRDA
〜
WRDG )

STRT  DTBT    PRTY  STOP              STRT    DTBT    PRTY  STOP

FIG. 5D

Data bits
( DBTB )×7

| HDER | CMD | ADRS | STTS | CS |

←1 byte→ ←1 byte→ ←2 bytes→ ←2 bytes→ ←1 byte→

EP 0 282 183 B1

FIG. 6A

# F I G. 6B

200

F I G. 7